# EUROPÄISCHE PATENTANMELDUNG

(11) **EP 2 103 207 A2**
(43) Veröffentlichungstag der Anmeldung: **23.09.2009**
(21) Anmeldenummer: 09154115.1
(22) Anmeldetag: 02.03.2009
(51) Int. Cl.: A01K 1/015

(54) **Kleintiereinstreu sowie Verfahren und Vorrichtung zu ihrer Herstellung**

(30) Priorität: 28.02.2008 DE 102008011855
(71) Anmelder: Futtermittel- und Dienstleistungs GmbH, 03249 Gossmar (DE)
(72) Erfinder: Barbiers, Hendrik J. F., 1811 CL Alkmaar (NL); Warsönke, Bernd, 03238 Heideland (DE)
(74) Vertreter: Gulde Hengelhaupt Ziebig & Schneider

(57) **Zusammenfassung**

Die Erfindung bezieht sich auf eine Kleintiereinstreu sowie ein Verfahren und eine Vorrichtung zu ihrer Herstellung. Die erfindungsgemäße Kleintiereinstreu enthält
- ein Stroh-Kleie-Gemisch,
- Bentonit und
- mindestens ein Alkalibisulfit.

## Beschreibung

Die Erfindung bezieht sich auf eine Kleintiereinstreu sowie ein Verfahren und eine Vorrichtung zu ihrer Herstellung.

Einstreumaterialien für Kleintiere sind bekannt. Sie dienen dem Zweck, Kleintiere, die insbesondere in der näheren Wohnumgebung gehalten werden, die Möglichkeit zu geben, auf hygienische Weise die tierischen Ausscheidungen möglichst geruchlos bzw. geruchsarm zu binden. Dazu ist es erforderlich, dass diese Kleintiereinstreu eine hohe Aufnahmekapazität für die tierischen Exkremente, insbesondere für die flüssigen Exkremente, aufweist. Darüber hinaus sollte die Einstreu ein möglichst geringes Schüttgewicht, verbunden mit einer leichten und unkomplizierten Entsorgungsmöglichkeit, besitzen. Es sollen möglichst Rohstoffe Verwendung finden, die den vernünftigen, ökologischen Anforderungen genügen können, z.B. für die Kompostierbarkeit der gebrauchten Einstreu bzw. ihre unproblematisch Entsorgung über das häusliche Abwasser.

In der DE 37 32 807 A1 wird ein Einstreumaterial für Kleintiere beschrieben, das im Wesentlichen aus zermahlenem Stroh besteht, das zu Briketts gepresst wurde. Diese Briketts werden dann zu unregelmäßigen Bruchstücken zerteilt, wobei Teilchen im Bereich von wenigen Millimetern Durchmesser entstehen, die für Kleintiere verträglich, saugfähig, geruchsbindend und leicht entsorgbar sein sollen. Es hat sich jedoch gezeigt, dass die auf diese Weise hergestellten Granulate eine geringe Aufnahmekapazität, insbesondere für flüssige Exkremente, besitzen und relativ geringe geruchsbindende Eigenschaften aufweisen.

In der DE 198 38 194 Al wird eine Tiereinstreu beschrieben, die zerkleinerte Zellulosematerialien und Bentonit oder andere Tonmineralien enthält. Als zerkleinerte Zellulosematerialien wird hier insbesondere Altpapier verwendet. Auch hier hat sich gezeigt, dass zwar die Granulate eine relativ große Festigkeit aufweisen, auch wenn sie mit flüssigen Exkrementen durchtränkt sind, jedoch die Aufnahmekapazität relativ gering ist. Hinzu kommt, dass der Altpapieranteil durchaus auch Bestandteile enthalten kann, die einer ökologischen Entsorgung möglicherweise entgegenstehen.

Aus DE 41 01 243 Al ist eine Tierstreu bekannt, deren Grundmaterialien Cellulose, Cellulosederivate und/oder Cellulose enthaltende Materialien sind, denen ein mineralisches Beschwerungsmittel und ein Verdicker und/oder Binde-mittel zugesetzt sind. Diese hat jedoch den Nachteil, dass bedingt durch Klumpenbildung des Verdickers, die Flüssigkeit sich in den oberen Lagen sammelt und eine Ausnutzung des gesamten Materials als Sorptionsmittel nicht gewährleistet ist.

Das Grunderfordernis an eine Tiereinstreu ist seine Feuchtigkeitsbindende Eigenschaft. Die ausgeschiedene Flüssigkeit soll an die Tiereinstreu gebunden bleiben und mit dieser zusammen entsorgt werden können.

Der Erfindung liegt daher die Aufgabe zugrunde, eine Kleintierstreu anzubieten, die ein hohes Flüssigkeitsbindevermögen, geringe Verklumpungsneigung verbunden mit einer hohen Geruchsbindung, aufweist und gleichzeitig die ökologische Entsorgung auf vernünftige Weise gewährleistet. Eine weitere Aufgabe besteht darin, diese Kleintierstreu kostengünstig mittels eines einfachen Verfahrens und einer platzsparenden Anlage herzustellen.

Die Lösung der Aufgabe wird durch die in den Ansprüchen 1, 10 und 15 wiedergegebene Erfindung dargestellt.

Erfindungsgemäß wird eine Kleintiereinstreu bereitgestellt, enthaltend
- ein Stroh-Kleie-Gemisch,
- Bentonit,
- und mindestens ein Alkalibisulfit.

Das erfindungsgemäße Verfahren zur Herstellung der Kleintiereinstreu umfasst die folgenden Verfahrensschritte: Zerkleinertes Stroh wird mit Kleie vermischt und auf eine Siebgröße von maximal 2 mm vermahlen, vorzugsweise auf eine Siebgröße < 1,5 mm. Anschließend werden Bentonit und Alkalibisulfit in wässriger Lösung dem Stroh-Kleie-Gemisch zugemischt. Nach einer Ruhezeit von mindestens 15 Minuten, vorzugsweise 20 bis 40 Minuten, wird das Gemisch gepresst, getrocknet, gekühlt und gesiebt. Vorzugsweise werden Pellets hergestellt.

Die erfindungsgemäße Vorrichtung zur Herstellung der Kleintiereinstreu umfasst
- eine Strohaufbereitung und Kleiebehälter 35 bis 40, S1, S2, 30 bis 34, B6, B7, B1;
- einer Mischeinrichtung 10, 11;
- Abstehbehälter B2, B3;
- eine Pelletierung B4, 17, 41 bis 44;
- eine Trocknung 19,
- eine Siebung 49 und ggf. eine Abfüllung B5, 29.

Vorteilhafte Weiterbildungen sind in den Unteransprüchen angegeben.

So ist eine vorteilhafte Ausgestaltung der Kleintier-einstreu dadurch gekennzeichnet, dass das Stroh im Stroh-Kleie-Gemisch eine Teilchengröße von maximal 2 mm aufweist. Stroh ist im allgemeinen die Bezeichnung für die trockenen Stengel und Blätter von Getreide, Hülsenfrüchten, Öl- und Faserpflanzen. In einer Weiterbildung enthält die erfindungsgemäße Kleintiereinstreu bevorzugt Getreidestroh wie Weizen-, Gerste-, Hafer-, Roggen- und Triticalestroh im Stroh-Kleie-Gemisch.

Die verwendete Kleie ist ein Nachprodukt beim Mahlen des Getreides. Kleie ist eine Sammelbezeichnung für die beim Mahlprozess als Rückstand anfallenden, zerkleinerten Bestandteile des äußeren Getreidekorns (Schale, Aleuronschicht und gegebenenfalls auch Keimling).

Erfindungsgemäß wird eine schwere Kleie verwendet, d.h. eine Kleie, die kleine Partikel(Korngrößen) besitzt. Bevorzugt ist eine Kleie mit Partikelgrößen ≤ 2mm. Bevorzugte Schüttgewichte liegen zwischen 200 bis zu 500 g/l. Vorzugsweise wird ein Haferschälkleie verwendet, die aber auch Zusätze durch Kleie weiterer Getreidekörner, wie Weizen, Roggen, Gerste oder Triticale (bis zu 50%) aufweisen kann. Vorzugsweise wird eine Haferschälkleie mit einer Partikel (Kory) -Größe von maximal 1 mm, vorzugsweise ≤ 0,8 mm, verwendet.

Eine erfindungsgemäße Tiereinstreu weist ein Stroh-Kleie-Gemisch auf, in dem die Kleie bevorzugt im Überschuss vorliegt, wobei das Verhältnis von Stroh : Kleie im Gemisch vorzugsweise bei 0,5-2 : 3-4,5 liegt, besonders bevorzugt bei 1 : 4.

Eine vorteilhafte Weiterbildung der Kleintiereinstreu ist dadurch gekennzeichnet, dass als Alkalibisulfit eine wässrige Lösung Natriumbisulfit mit einer Konzentration von 35-45%, vorzugsweise 38-40 % enthalten ist.

In einer erfindungsgemäßen Ausgestaltung der Kleintiereinstreu sind Seifen enthalten, die sowohl eine antivirale und antibaktierelle Wirkung als auch eine schmierende Wirkung beim Passieren der Transportwege der erfindungsgemäßen Vorrichtung entwickeln.

Die erfindungsgemäße Kleintiereinstreu kann weitere Zusätze wie Farbstoffe und Geruchsverbesserer enthalten.

Bekanntermaßen nimmt die ausgeschiedene Flüssigkeit den stechenden Geruch von Ammoniak an, da der Harnstoff enzymatisch (durch Urease) in Ammoniak (NH₃) und Kohlendioxid um-gewandelt wird. Eine vorteilhafte Ausgestaltung der Kleintiereinstreu ist deshalb z.B. dadurch gekennzeichnet, dass als Geruchsverbesserer Nitrifikationsbakterien enthalten sein können, die beim Kompostierungsprozess die Umwandlung des Amid-Stickstoffes (Harnstoff) bzw. des Ammoniaks in Nitrat-Stickstoffes bewirken können. Man unterscheidet zwischen Ammoniumoxidierer und Nitritoxidierer. Zwei sehr bekannte Gattungen sind z.B. Nitrosomas und Nitrobacter.

Überraschend haben sich auch Zusätze von Mikroorganismen der Gattung Bacillus als besonders geeignete Zusätze für die erfindungsgemäße Tiereintreu erwiesen. Bevorzugt werden Bacillus-Mikroorganismenstämme ausgewählt aus Bacillus amyloliquefaciens, Bacillus licheniformis, Bacillus subtilis, Bacillus megaterium und/oder Bacillus pumulus einzeln oder in Kombinationen der erfindungsgemäßen Einstreu zugesetzt. Die Bacillus-Kulturen können einzeln oder als Mischkulturen eingesetzt werden, wobei die Einzelkulturen untereinander kombiniert werden können, so dass Mischkulturen aus zwei, drei oder vier unterschiedlichen Kombinationen bzw. aus allen fünf Stämmen gebildet werden können. Unter Zusatz der Mikroorganismenkulturen wird normalerweise freigesetzter Ammoniak (NH₃) in der feuchten Umgebung zu NH₄, welches den Mikroorganismen als Nährstoff dient, wodurch wiederum Urease gebildet wird, die den Harnstoff abbaut. Insbesondere die Zugabe einer Mischkultur, die alle fünf Species kombiniert, beschleunigt eine Zersetzung und ermöglicht so eine noch schnellere Geruchsbindung.

Die Mikroorganismenkulturen werden vorzugsweise der Einstreu nach dem Trocknungsprozess zugegeben, indem sie in flüssiger Lösung versprüht werden. In einer bevorzugten Ausführungsform der Erfindung werden Kulturen versprüht, die ca. 500 Millionen bis 2 Milliarden Bakterien/ml aufweisen.

Ein ganz besonders bevorzugte Kleintiereinstreu besteht aus einem Stroh-Haferschälkleie-Gemisch
Bentonit,
Natriumbisulfit und
gegebenenfalls Seife und/oder
gegebenenfalls Bacillus Mikroorganismen,
vorzugsweise in Form von Pellets.

Eine Weiterbildung des erfindungsgemäßen Verfahrens zur Herstellung der erfindungsgemäßen Kleintiereinstreu ist dadurch gekennzeichnet, dass die einzelnen Komponenten wie folgt eingesetzt werden:
- Stroh mit einem Schüttgewicht von 80 bis 200 g/l, vorzugsweise von 110 bis 130 g/l,
- Kleie, vorzugsweise Haferschälkleie, mit einem Schüttgewicht von 200 bis 400 g/l, vorzugsweise von 260 bis 320 g/l
- Bentonit mit einem Schüttgewicht von 900 bis 1200 g/l, vorzugsweise von 1000 bis 1100 g/l
- und Alkalibisulfitlösung, vorzugseise Natriumsulfit, in einer Konzentration von 35-45 vorzugsweise 38-40%.

Stroh und Kleie werden gemischt, wobei die Kleie vorzugsweise im Überschuss vorgelegt wird. Das Verhältnis von Stroh : Kleie im Gemisch liegt vorzugsweise bei 0,5-2 : 3-4,5.

Bevorzugt werden 60 bis 80 Ma-% eines Stroh-Kleie-Gemisches, mit 15 bis 30 Ma-% Bentonit und 0,1 bis 0,5 Ma-% Alkalibisulfit in Wasser (5 bis 25 Ma-%) vermischt, ggf. unter Zusatz von 0,1 bis 1,5 Ma-% Seife, anschließend vorzugsweise pelletiert und getrocknet. Ggf. erfolgt nach der Trocknung eine Versprühung von 0,1 bis 0,5 Ma.% von Bacilluskulturen, vorzugsweise als Mischkultur oben genannter fünf Species. Abschließung kann die Siebung und Abfüllung der Tierstreu-Pellets erfolgen.

Eine vorteilhafte Ausgestaltung des Verfahrens sieht vor, dass bei der Wasserzugabe der Feuchtigkeitsgehalt der Rohstoffe berücksichtigt wird.

Die neue Einstreu besteht aus fein zermahlenen Strohfasern im Gemisch mit Kleie, vorzugsweise Haferschälkleie, und dem natürlichen Mineral Bentonit sowie Alkalibisulfit, und ggf. verschiedenen Zusätzen zur Verbesserung der Presseigenschaften und der Produktqualität. Aufgrund des Pressvorganges bei der Herstellung der Einstreu entstehen Pellets von relativ großer Härte, wobei die Pellets eine zylindrische Form aufweisen mit einem Durchmesser von ca. 6 mm und einer Länge von ca. 20 mm. Die so ausgebildeten Pellets verklumpen nicht, wenn die flüssigen Exkremente durch die Tiere in die Einstreu eingebracht werden. Der Urin fließt sofort durch die Pelletschüttung nach unten durch und sammelt sich auf dem Gefäßboden. Dort setzt dann nach und nach eine Kompostierung der Strohanteile der Pellets unter Verbrauch des Stickstoffs des Urins ein. Unterstützt wird dieser Prozess durch Kompostierungshilfsmittel wie beispielsweise Natriumbisulfit. Die bei der Herstellung der Pellets eingebrachten Seifen haben nicht nur den Vorteil, dass aufgrund der entstehenden schmierenden Wirkung Vorrichtungsteile geschont werden, sondern die enthaltenen Tenside, hier die sogenannten anionischen Tenside der Talgseifen, entfalten beim Herstellungsprozess und innerhalb der Kleintiertoilette eine antivirale und antibakterielle Wirkung. Der in der Pelletschüttung von unten einsetzende Kompostierungsprozess des in den Pellets enthaltenen Strohs führt aufgrund des Stickstoffverbrauchs zu einer Verminderung der Ammoniakentstehung und damit auch zu einer Verminderung bzw. Verhinderung der Entstehung von Ammonialcgerüchen.

Die besonders harten erfindungsgemäß hergestellten Pellets verklumpen nicht, so dass der Durchlauf flüssiger Exkremente nach unten erhalten bleibt.

Beispielsweise enthält Katzen- und Nagetierurin sehr viel Stickstoff in Form des geruchsintensiven und sich sehr leicht verflüchtigenden Ammoniaks und andere organische Nährstoffe. Die neue Streu enthält wegen ihrer Zusammensetzung Stoffe, welche darüber hinaus über ein extra hohes Absorptionsvermögen für die extrem lästigen Gerüche verfügen. Das gebrauchte und somit zu entsorgende Einstreumaterial kann vorteilhafter weise durch Kompostierung zu wertvollem Humus umgewandelt werden.
Technisch gesehen passiert dabei folgendes: Beim Stoffwechsel von Tieren werden die organischen Nährstoffe aus dem Tierfutter zum Teil in Harnstoff und Wasser (= Urin) umgewandelt. Sobald der Urin mit Sauerstoff in Kontakt kommt, wird daraus allmählich Ammoniak und Kohlendioxid gebildet, was den allseits bekannten, penetranten Geruch verursacht. Die restlichen (unverdauten) Nährstoffe gelangen u.a. in den Urin und hinterlassen ebenfalls einen sehr unangenehmen Geruch.

Das Pellet absorbiert alle diese Stoffe auf natürliche Weise und verhindert somit die Bildung von Ammoniak. Die Streu saugt den Geruch wie ein Schwamm regelrecht auf. Entsprechende Tests haben bewiesen, dass diese neue Streu etwa 3 mal länger in der Katzenoder Nagetiertoilette genutzt werden kann als übrige Einstreu. Dazu sollte man aus der Katzen- und Nagetiertoilette allerdings täglich den Kot entfernen.

Die erfindungsgemäße Kleintierstreu hat gegenüber der herkömmlich angebotenen Einstreu folgende Vorteile:
- Die neue Einstreu verhindert die Entwicklung des Am moniakgeruchs aus dem Urin in die Umwelt.
- Die neue Einstreu ist kompakt und sehr wirksam, wo-durch 2 bis 3 mal weniger Streu als bei herkömmlicher Einstreu benötigt wird.
- Die Einstreu beansprucht weniger Platz.
- Die Einstreu kann in der Biotonne entsorgt werden.
- Die Einstreu kann (in kleinen Mengen) durchs WC gespült werden.
- Die Einstreu kann nach dem Gebrauch als Humus verwendet werden.
- Diese Einstreu ist absolut umweltverträglich und wird
- überwiegend aus nachwachsenden Bio-Rohstoffen hergestellt.

Die Erfindung wird anhand von Ausführungsbeispielen näher erläutert:

### Beispiel 1

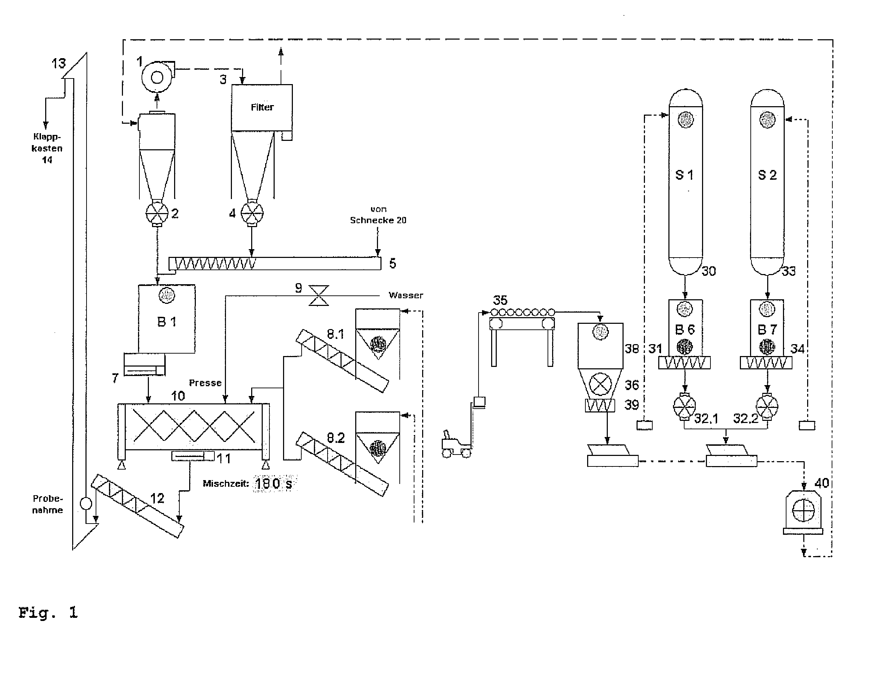

In der folgenden Tabelle wird beispielhaft eine Rezeptur für die Herstellung der erfindungsgemäßen Einstreu angegeben. Die Angaben beziehen sich auf eine Produktionseinheit in einer Mischeinrichtung 10 (vgl. Fig. 1).

| **Rohstoffe** | **Feuchtigkeitsgehalt der Rohstoffe in kg** | **Masseanteil in kg** | **Masseanteil in %** |
|---|---|---|---|
| Stroh/Kleiegemisch | 52,63 | 484,5 | 78,02 |
| Bentonit | 9,03 | 129 | 20,77 |
| Natrium-Talgseife | 0,98 | 6,5 | 1,04 |
| Natriumbisulfit | | 1 | 0,17 |
| Summe | 62,69 | 621 | 100 |
| Wasserzusatz: | | 104 | |
| Produktionseinheit | | | |
| (Mischeinrichtung 10) | | 725 kg | |

Die für die Herstellung notwendigen Rohstoffe sind, wie aus der Tabelle zu entnehmen ist, Stroh, Kleie (Haferschälkleie), Bentonit, Natrium-Talgseife und Natriumbisulfit. Stroh und Kleie sind im Verhältnis 1:4 vermischt worden. Die jeweiligen Bestandteile wurden mit folgenden Schüttgewichten und Konzentrationen eingesetzt:

| | |
|---|---|
| Stroh | 110 g/l |
| Haferschälkleie | 290 g/l |
| Bentonit | 790 g/l |
| Natriumbisulfit-Lösung | 38-40 %. |

Die verwendete Haferschälkleie besitzt die folgende Siebanalyse bei 500 g:

| | | | | | |
|---|---|---|---|---|---|
| Siebgröße (in mm) | 2,5 | 1,0 | 0,8 | 0,6 | <0,6 |
| Gewicht (in g) | 1 | 16 | 84 | 98 | 301 |
| %-Anteil | 0,2 | 3,2 | 16,8 | 19,6 | 60,2 |

Darüber hinaus erfolgt ein Wasserzusatz in der dort angegebenen Menge. Alle eingesetzten Rohstoffe weisen einen bestimmten Feuchtigkeitsgehalt auf, der beispielsweise bei Weizenstroh bei ca. 11% liegt. Der Feuchtigkeitsgehalt der Rohstoffe muss beim Wasserzusatz berücksichtigt werden. Das Verfahren und die Vorrichtung wird anhand einer Zeichnung näher erläutert.

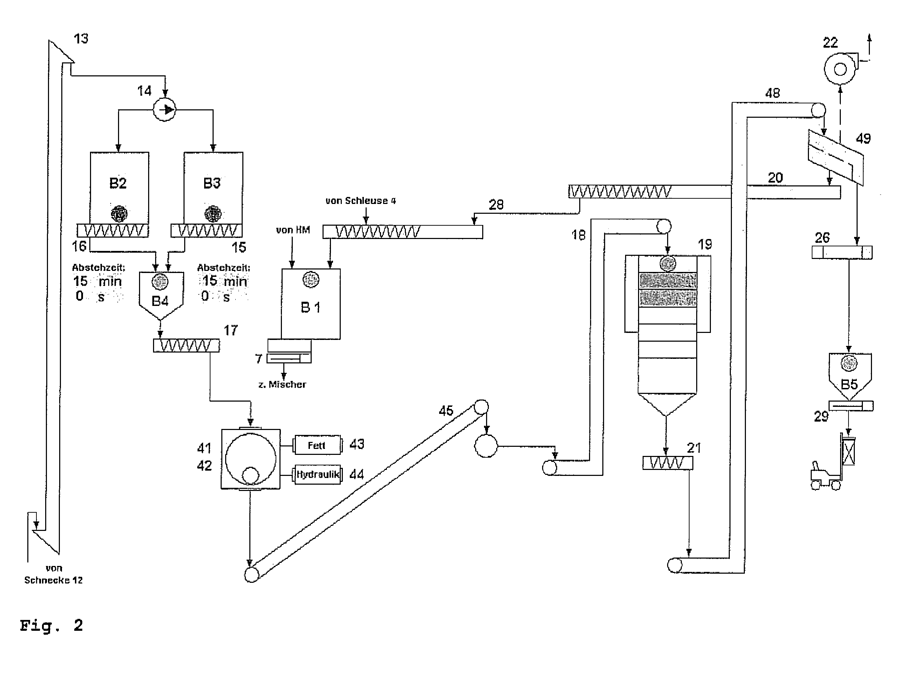

In Fig. 1 + Fig. 2 ist die schematische Darstellung der Vorrichtungsteile gegeben.
Fig. 1 zeigt die Strohaufbereitung und Kleiezuführung 35, 38, 36, 39, 40, S1, S2, 30, 33, B6, B7, 31, 34, 32.1, 32.2, B1 sowie die Mischeinrichtung 10, 11.
Fig. 2 zeigt Abstehbehälter B2, B3, Pelletierung B4, 17, 41, 42, 43, 44, 45, Trocknung 18, 19 20, 21, Siebung 48, 49, 26 und Abfüllung B5, 29.
In Fig. 3 ist eine schematische Darstellung des Verfahrens gegeben.

Das erfindungsgemäße Verfahren und die erfindungsgemäße Vorrichtung werden anhand von Fig. 1, Fig. 2 und Fig. 3 näher erläutert.

Das Stroh wird über ein Strohballenband 35 in einen Strohfräßer 36, 38 transportiert und mittels Schnecke 39 in eine Strohmühle 40 überführt. Gleichzeitig wird Kleie aus Kleiesilos S1, S2 mit Austragsboden 30, 33 über die Behälter B6+B7 mit den Dosierschnecken 31 und 34 und die Zellenradschleusen 32.1 und 32.2 in die nicht näher dargestellte Strohmühle 40 (Hammermühle) überführt, wobei das Stroh bis 1,5 mm zerkleinert und in einen Abscheider befördert wird, in dem mittels einer Zellenradschleuse 2 die verwendungsfähige Fraktion Stroh-Kleie-Gemisch einem Vorratsbehälter B1 zugeführt wird. Die nicht verwendungsfähigen Teile des zerkleinerten Strohs werden über ein Gebläse 1 einem Filter 3 zugeführt, der über einen Abscheider mittels einer weiteren Zellenradschleuse 4 die weiteren, verwendungsfähigen Fraktionen des zerteilten Strohs einem Schneckenförderer 5 und dem Vorratsbehälter B1 zuführt. Der Feuchtigkeitsgehalt des zerkleinerten Strohs beträgt hier 6 bis 11%.

Mittels eines Auslaufschiebers 7 wird das zerkleinerte Stroh im Gemisch mit der Kleie aus dem Vorratsbunker B1 einem Mischer 10 zugeführt. Über eine Wasserzuführung 9 wird erforderliches Wasser und Natriumbisulfit 9.1 in den Mischer 10 eingebracht. Die Bentoniteinträge 8.1 und 8.2 führen mittels Förderbänder in der geforderten Menge das Bentonit dem Mischer 10 zu. Der Wassergehalt der Mischung beträgt jetzt ca. 20 bis 23%. Zusätzlich wird dem Mischer 10 ggf. Natriumtalgseife H (per Hand) zugefügt.

Durch Öffnen eines Auslaufschiebers 11 wird die Mischung einer Rohrschnecke 12 zugeführt. Ein Elevator 13 fördert das Gemisch in die Abstehbehälter B2 und B3, die wechselseitig über Klappkasten 14 befüllt und geleert werden. In den Abstehbehältern B2 und B3 verweilt die Mischung ca. 20 bis 20 Minuten (mindestens 15 Minuten), um zu quellen. Austragsschnecke 15 und Austragsschnecke 16 über den Abstehbehältern B2 und B3 angeordnet, befördern das Gemisch aus den Abstehbehältern in einen Pressenvorbehälter B4. Eine weitere Rohrschnecke 17 transportiert nun das Gemisch in die Pressenanlage 41, 42 der Pelletierung. In der Pressenanlage 41, 42 werden ggf. unter Zuführung von Fett 43 mittels Hydraulik 44 bei ca. 65 bis 75°C die Pellets gepresst. Die Dichte beträgt dann ca. 600 g/l bei einer Feuchtigkeit von 18 bis 25%. Von der Pressenanlage 41, 42 werden die entstandenen Pellets über ein Förderband 45 in ein Pendelbecherwerk 18 überführt. Vom Pendelbecherwerk 18 gelangen die Pellets in einen Durchlauftrockner 19, von dem über einen Pelletförderer 48 die Pellets zu einer Siebmaschine 49 geführt werden. Ein Steilförderband 26 überführt sie in einen Pelletbunker (Vorratsbehälter) B5. Mittels Schnecke 20 wird die staubhaltige Luft von einer Besaugung der Siebmaschine 49 in Staub und saubere Luft getrennt. Die nicht verwendungsfähigen Anteile werden über ein Gebläse 22 abgeführt. Strohanteile bzw. die Luft können über eine Verbindung 28 der Förderschnecke 5 und so dem Vorratsbehälter B1 erneut zugeführt werden. Über einen Pneumatikschieber 29 können die Pellets zur Verladung in Säcke abgefüllt und abtransportiert werden.

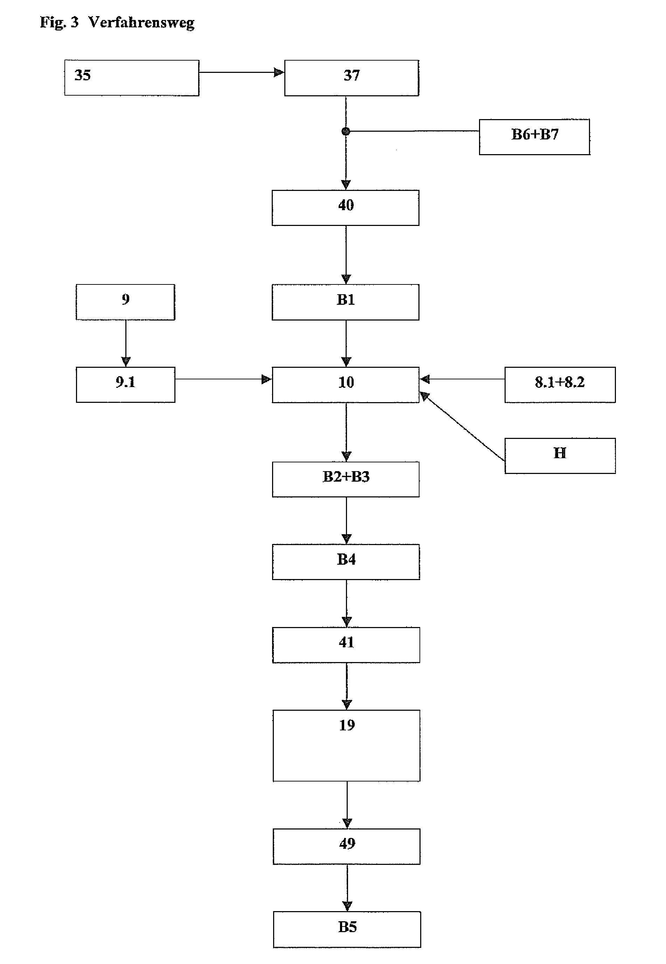

Fig. 3 zeigt das erfindungsgemäße Verfahren schematisch.

Das Stroh wird mittels Strohballenband 35 transportiert. Strohreißer 37 und Kleie aus den Behältern B6 + B7 werden gemischt und über die Mühle 40 dem Mischer 10 zugeführt. Im Mischer 10 werden dem Stroh-Kleie-Gemisch Wasser 9, Natriumbisulfit 9.1 und Bentonit 8.1 + 8.2 sowie Seife H zugemischt. Nach einer Ruhezeit im Abstehbehälter B2 oder B3 wird das Gemisch in den Pressenvorbehälter B4 sowie in die Pelletpresse 41 überführt. Vor dort erfolgt der Transport in den Durchlauitrockner 19 und anschließend über die Siebmaschine 49 in den Pelletbunker B5. Anschließend können die Pellets zur Verladung abgefüllt und abtransportiert werden.

### Bezugszeichenliste

- **1**: Gebläse
- **2**: Zellenradschleuse
- **3**: Staubfilter
- **4**: Zellenradschleuse
- **5**: Förderschnecke

- **7**: Auslaufschieber
- **8.1.**: Bentonitschnecke
- **8.2.**: Bentonitschnecke
- **9**: Wasserzuführung
- **9.1**: Na-bisulfitlsg.
- **10**: Chargenmischer
- **11**: Auslaufschieber
- **12**: Förderschnecke
- **13**: Elevator
- **14**: Klappkasten
- **15**: Austragsschnecke
- **16**: Austragschnecke
- **17**: Dosierschnecke
- **18**: Becherwerk
- **19**: Durchlauftrockner
- **20**: Förderschnecke
- **21**: Austragschnecke
- **22**: Gebläse
- **26**: Trockenförderer
- **29**: Auslaufschieber
- **30**: Austragsboden
- **31**: Dosierschnecke
- **32.1**: Zellenradschleuse
- **32.2**: Zellenradschleuse
- **33**: Austragsboden
- **34**: Dosierschnecke
- **35**: Strohballenband
- **36**: Strohfräser Messerwelle
- **37**: Strohreißer
- **38**: Strohfräser Trichter
- **39**: Schnecke

- **40**: Strohmühle
- **41**: Pelletpresse
- **42**: Pelletpresse
- **43**: Fettpumpe
- **44**: Hydraulikpumpe
- **45**: Transportband
- **48**: Pelletförderer
- **49**: Siebmaschine
- **50**: Klappkasten
- **B1**: Vorratsbunker Stroh/Kleie
- **B2**: Abstehbehälter 1
- **B3**: Abstehbehälter 2
- **B4**: Pressenvorbehälter
- **B5**: Pelletbunker
- **B6**: Kleiebehälter
- **B7**: Kleiebehälter
- **H**: Seife (Handkomponente)
- **S1/S2**: Kleiesilos

## Patentansprüche

1. Kleintiereinstreu, enthaltend
- ein Stroh-Kleie-Gemisch,
- Bentonit und
- mindestens ein Alkalibisulfit.

2. Kleintiereinstreu nach Anspruch 1,
**dadurch gekennzeichnet, dass** es weiterhin Seifen enthält.

3. Kleintiereinstreu nach Anspruch 1 oder 2,
**dadurch gekennzeichnet, dass**
das Stroh im Stroh-Kleie-Gemisch eine Teilchengröße von maximal 2 mm aufweist und dass es Getreidestroh wie Weizen-, Gerste-, Hafer-, Roggen- und/oder Triticalestroh ist.

4. Kleintiereinstreu nach einem der Ansprüche 1 bis 3,
**dadurch gekennzeichnet, dass** die Kleie im Stroh-Kleie-Gemisch schwere Klein mit Korngrößen von ≤ 2,0 mm ist, vorzugsweise Haferschälkleie mit Korngrößen von maximal 1 mm.

5. Kleintiereinstreu nach einem der Ansprüche 1 bis 4,
**dadurch gekennzeichnet, dass**
als Zusätze Bacillus-Mikroorganismenstämme enthalten sind, vorzugsweise ausgewählt aus Bacillus amyloliquefaciens, Bacillus licheniformis, Bacillus subtilis, Bacillus megaterium und/oder Bacillus pumulus einzeln o-der in Kombinationen.

6. Kleintiereinstreu nach einem der Ansprüche 1 bis 5,
**dadurch gekennzeichnet, dass** das Stroh-Kleie-Gemisch die Kleie im Überschuss aufweist.

7. Kleintiereinstreu nach Anspruch 6,
**dadurch gekennzeichnet, dass** das Verhältnis von Stroh : Kleie im Gemisch bei 0,5-2 : 3-4,5 liegt, vorzugsweise bei 1 : 4.

8. Kleintiereinstreu nach einem der Ansprüche 1 bis 7,
**dadurch gekennzeichnet, dass**
als Alkalibisulfit Natriumbisulfit enthalten ist.

9. Kleintiereinstreu nach einem der Ansprüche 1 bis 8, bestehend aus
- einem Stroh-Haferschälkleie-Gemisch
- Bentonit,
- Natriumbisulfit und
- gegebenenfalls Seife und/oder
- gegebenenfalls Bacillus Mikroorganismen.

10. Verfahren zur Herstellung von Kleintiereinstreu nach einem der Ansprüche 1 bis 9, **dadurch gekennzeichnet, dass** zerkleinertes Stroh mit Kleie vermischt und auf eine Siebgröße von maximal 2 mm vermahlen wird, danach Bentonit und Alkalibisulfit in wässrigerLösung zugemischt werden und nach einer Ruhezeit das Gemisch gepresst, getrocknet, gekühlt und gesiebt wird.

11. Verfahren nach Anspruch 10,
**dadurch gekennzeichnet, dass**
das Stroh-Kleie-Gemisch die Kleie im Überschuss aufweist, vorzugsweise mit einem Verhältnis von Stroh : Kleie von 0,5-2 : 3-4,5.

12. Verfahren zur Herstellung von Kleintiereinstreu nach Anspruch 10 oder 11,
**dadurch gekennzeichnet, dass**
mit dem Bentonit und Alkalibisulfit Seife zugemischt werden.

13. Verfahren nach einem der Ansprüche 10 bis 12,
**dadurch gekennzeichnet, dass** die Bestandteile wie folgt eingesetzt werden:
- Stroh mit einem Schüttgewicht von 80 bis 200 g/l,
- Kleie, vorzugsweise Haferschälkleie, mit einem Schüttgewicht von 200 bis 400 g/l,
- Bentonit mit einem Schüttgewicht von 900 bis 1200 g/l,
- und Alkalibisulfitlösung, vorzugsweise Natriumsulfit, in einer Konzentration von 35-45%.

14. Verfahren nach einem der Ansprüche 10 bis 13,
**dadurch gekennzeichnet, dass**
Bacillus-Mikroorganismen ausgewählt aus Bacillus amyloliquefaciens, Bacillus licheniformis, Bacillus subtilis, Bacillus megaterium und/oder Bacillus pumulus einzeln oder in Kombinationen nach dem Trocknungsprozess zugesprüht werden.

15. Vorrichtung zur Herstellung von Kleintiereinstreu gemäß einem der Ansprüche 1 bis 14 umfassend
- eine Strohaufbereitung und Kleiebehälter (35 bis 40, S1, S2, 30 bis 34, B6, B7, B1);
- eine Mischeinrichtung (10, 11);
- Abstehbehälter (B2, B3);
- eine Pelletierung (B4, 17, 41 bis 44);
- eine Trocknung (19),
- eine Siebung (49) und
- ggf. eine Abfüllung (B5, 29).
